# DEMANDE DE BREVET EUROPEEN

(11) **EP 0 861 686 A2**
(43) Date de publication de la demande: **02.09.1998**
(21) Numéro de dépôt: 98400370.7
(22) Date de dépôt: 17.02.1998
(51) Int. Cl.: B01F 17/00, C08L 93/00, C08L 95/00

(54) **Emulsifiant pour composer des émulsions bitumeuses acides enrobant tous les matériaux, y compris calcaires**

(30) Priorité: 28.02.1997 FR 9702430
(71) Demandeur: CECA S.A., 92800 Puteaux (FR)
(72) Inventeur: Navascues, Luc, 75011 Paris (FR); Rouet, Dominique, 95110 Sannois (FR); Fabre, Jean-Claude, 94220 Charenton le Pont (FR)
(74) Mandataire: Haicour, Philippe

(57) **Abrégé**

L'émulsifiant est une composition de suifpropylènediamine ou dérivés alkylaminés équivalents et de colophane, utilisable comme les émulsifiants alkylaminés traditionnels dans la réalisation d'émulsions acides de bitume pour enrobage. Les enrobés de calcaires ainsi obtenus ne déchaussent pas.

## Description

La présente a trait à la fabrication de matériaux enrobés à usage routier ou assimilé.

La fabrication d'enrobés à froid par malaxage de granulats avec une émulsion bitumineuse est une opération universellement pratiquée. L'usage s'est très largement répandu de l'utilisation, à cette fin, d'émulsions bitumineuses cationiques, en particulier celles qui sont réalisées avec des suifpolypropylènepolyamines, dont le type est la suifpropylènediamine. On obtient des résultats satisfaisants, c'est-à-dire la formation d'un film de liant continu, adhésif et dans des délais relativement brefs, avec la plupart de matériaux durs utilisés comme granulats, et notamment avec les quartzites, les matériaux porphyriques, les silico-calcaires. Cependant, avec des matériaux à réaction basique comme les calcaires durs, il arrive très fréquemment que, bien que l'enrobage se soit produit dans des conditions apparemment correctes, le film de bitume formé par la rupture de l'émulsion n'offre qu'une très médiocre adhésivité au granulat. Celle-ci ne se manifeste pas forcément immédiatement, mais après séchage définitif de l'enrobé et en dehors de toute action mécanique durant ce délai. Elle constitue une menace pour la pérennité de l'ouvrage. Il n'y a pas d'alternative dans le recours à des émulsions bitumineuses anioniques ou non ioniques, qui procurent des enrobages immédiatement satisfaisants, mais ne résistent pas du tout au lessivage par l'eau. Ces phénomènes ont été décrits, par exemple dans le brevet US 3,867,162 (Chevron Research Cy), qui propose une solution spécifique pour l'enrobage de calcaires qui consiste à ajouter à une émulsion d'enrobage à pH sensiblement neutre sinon franchement alcaline, de promoteurs d'adhésivité pris dans la famille générique des tall oils et de divers acides résiniques.

La réalité pratique des chantiers de travaux routiers sur voirie secondaire, et même des travaux routiers tout court dans les régions ou contrées peu favorisées quant à la qualité des granulats disponibles, est que l'on a souvent recours à des matériaux alluvionnaires. Même si l'on vise des matériaux durs, il faut compter avec des approvisionnements plus ou moins riches en composants basiques. Ce que l'on souhaite, c'est de pouvoir disposer d'émulsions d'enrobage donnant des résultats acceptables quelle que soit la fluctuation dans la qualité des matériaux à enrober. En d'autres termes, il faut pouvoir disposer d'émulsions bitumineuses cationiques acides enrobant convenablement les quartzites, les porphyriques, les silico-calcaires, les calcaires et leurs mélanges. Ces exigences sont rassemblées dans des cahiers des charges plus ou moins officieux, puisqu'il ne s'agit pas des prescriptions relatives aux travaux sur grands réseaux, et qui s'inspirent très souvent, pour ce qui est de l'émulsion, de la norme ASTM D2397. Cette norme impose aux particules de bitume une charge positive. Elle est complétée pour la circonstance d'une exigence supplémentaire de pH de 1,4 à 4, et pour l'aptitude à l'enrobage, de tests qu'on trouvera explicités plus loin dans les exemples.

On vient maintenant de trouver qu'il est possible de façonner des enrobés à froid répondant à ces exigences, si l'on emploie comme enrobant une émulsion bitumineuse acide réalisée avec un émulsifiant qui est une composition de colophane ou de dérivés apparentés et de dérivés alkylaminés pris dans le groupe constitué par les alkylpolypropylène polyamines, les alkylamidopolyméthylènepolyamines et leurs dérivés immédiats de cyclisation, le groupe alkyl étant un reste hydrocarboné, saturé ou insaturé dont le nombre de carbone est environ de 12 à 22, ainsi que leurs dérivés oxyéthylés ou oxypropylés.

Parmi les dérivés alkylaminés les plus utilisés, on cite la suifpropylène diamine et la suif dipropylène triamine techniques ainsi que leurs dérivés oxypropylés, ou les suif-amidopolyéthylènepolyamines ou les suif-imidazolinopolyéthylènepolyamines.

Ce qu'au sens de l'invention, on entend par colophane ou produits apparentés, sont les résines de distillation des huiles de pin, autrement nommées rosines et qui contiennent 90% ou plus d'acides résiniques de la famille de l'acide abiétique.

L'émulsifiant selon l'invention est une composition comportant la colophane et le composant alkylaminé dans un rapport pondéral de 5/95 à 40/60 On l'obtient très aisément par mélange des composants poudres, préférentiellement à une température n'excédant pas 70°C / 80°C. Il se présente généralement sous l'aspect d'une cire, d'un liquide épais ou d'une pâte molle, d'aspect ambré, fusible à des températures inférieures à 50°C en liquide fluide. La fusion et le maintien en température raisonnable du produit fondu n'altèrent pas ses propriétés physiques, physico-chimiques ou chimiques. En particulier, l'indice d'acide et l'alcalinité restent stables, ce qui traduit l'absence d'altération de la composition par une réaction d'amidation qu'on pourrait craindre entre les composants. Si cela est souhaité, on peut formuler la composition sous une forme plus fluide en y introduisant une certaine quantité de solvant du dérivé aminé et de la colophane et en même temps compatible avec le liant noir émulsionné, par exemple une huile anthracénique. Les compositions telles que :
- mélange colophane et le composant alkylaminé en rapport pondéral 5/95 à 40/60 100 à 50% en poids,
- solvant 0 à 50% en poids.
appartiennent à l'invention

Les émulsions bitumineuses acides réalisables avec l'émulsifiant de l'invention et utilisables pour la fabrication d'enrobés à partir de matériaux de tous types ont par ailleurs les compositions ordinaires des émulsions bitumineuses courantes de type liant dans l'eau, à savoir 50 % à 70 % de liant bitumineux, 0,15 % à 0,2 % d'émulsifiant, pH de 1,4 à 4 par l'acide chlorhydrique, ou acétique, ou phosphorique. On les prépare sans difficulté en suivant les procédures bien connues de l'homme de l'art pour la fabrication d'émulsions bitumineuses avec émulsifiants alkylaminés conventionnels. La mise au pH acide de la phase aqueuse est opérée avec les mêmes acides, chlorhydrique, acétique, phosphorique. On recommande toutefois la salification à l'acide phosphorique, reconnu comme favorable à d'adhésion de l'émulsion sur les granulats basiques. Ces émulsions sont également un objet de la présente invention.

Les exemples suivants illustrent l'invention.

### EXEMPLE 1

### a) Préparation d'une composition émulsifiante

Dans un réacteur chauffé vers 70°C / 80°C°, on introduit sous agitation 70 parties de suifpropylènediamine (Dinoram®S, CECA S.A., alcalinité chlorhydrique = 6 méq/g), puis 30 parties d'une colophane de pin pulvérisée (colophane 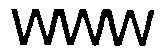 de la société RESINELAND, d'indice d'acide 165 mg KOH/g et de masse moléculaire moyenne mesurée par GPC dans le THF de 270). On poursuit l'agitation jusqu'à obtention d'une phase liquide homogène et limpide, qui se prend en cire au refroidissement dès 30°C. L'alcalinité et indice d'acide s'établissent respectivement à 4,2 méq/g et 49,5 mg de KOH/g, valeurs attendues d'après les caractéristiques des composants.

### b) Préparation de l'émulsion

On prépare une émulsion à 69% de liant bitumineux en turbinant dans un moulin colloïdal de laboratoire et dans les conditions bien connues de l'homme de l'art, un bitume de pénétration 60/70 contre une phase aqueuse obtenue par dissolution dans l'eau et acidification à pH 2 par l'acide chlorhydrique du l'émulsifiant préparé sous a), à raison de 2,5 kg d'émulsifiant par tonne d'émulsion. On procède de la façon suivante.

Dans un Erlenmeyer, on introduit 310 parties d'eau. On ajoute sous agitation à chaud (40°C), 5 parties de l'émulsifiant préparé en a) ci-dessus. On acidifie à pH 2 par addition d'une solution d'acide chlorhydrique à 37%.

La solution ainsi obtenue est chargée dans le bac à savon du moulin colloïdal et y est portée à 50°C, tandis qu'on charge un bitume de pénétration 60/70 dans le bac à bitume où la température est portée à 150°C. On règle le moulin colloïdal pour 69% le bitume, 31% de phase aqueuse.

On obtient ainsi une émulsion sans retenue au tamisage, et de bonne stabilité.

### c) Evaluation de l'émulsion pour son aptitude à l'enrobage de calcaires durs

Dans une coupelle émaillée, peser 461 g de matériaux calcaires durs (carrières du Boulonnais) lavés et séchés, de granulométrie 0/20 mm. Ajouter 4 g de carbonate de calcium pour simuler les poussières basiques qui souvent encombrent les granulats calcaires. Homogénéiser à la spatule. Ajouter 35g de l'émulsion préparée sous b). Mélanger l'ensemble matériaux / émulsion pendant cinq minutes. Laver sous eau.

Les matériaux issus de ce traitement sont totalement enrobés. On n'a observé aucun phénomène de déchaussement du liant au cours du malaxage, ni de désenrobage sous l'action de l'eau.

### d) Evaluation de l'émulsion pour son aptitude à l'enrobage de quartzite

On procède comme sous c) à la différence que le les 461 g de granulats sont des quartzites (Carrières de Vignat). Le résultat est tout à fait correct : les matériaux résultant de ce traitement sont totalement enrobés.

### EXEMPLE 2 (comparatif)

On répète les opérations précédentes, à la différence que la composition émulsifiante est formulée uniquement avec 40 g de Dinoram S. Avec l'émulsion préparée avec cette composition émulsifiante, l'enrobé de quartzite est correctement enrobé, mais l'enrobé de calcaire déchausse en cours de malaxage.

### EXEMPLE 3

On répète les opérations de l'exemple 1, à la différence qu'au cours de la préparation de la composition a), le mélange Dinoram S / colophane est chauffé à 150°C et maintenu 4 heures à cette température. On n'observe aucune différence sensible ni dans l'aspect de la composition émulsifiante, ni dans ses caractéristiques (alcalinité = 4,2 méq/g, indice d'acide = 49,5 mg KOH/g). L'émulsion obtenue enrobe le quartzite et le calcaire comme dans l'exemple 1.

### EXEMPLE 4

On répète les opérations précédentes, à la différence que la composition émulsifiante est constituée de 80 parties de Polyram®SL (une suifpropylène triamine oxypropylée de CECA S.A.) et de 20 parties de colophane pulvérisée et que l'émulsion est préparée à 60% de bitume 180/220 à partir d'une phase aqueuse réalisée à partie de cet émulsifiant et amenée à pH 2 par l'acide phosphorique. La teneur de l'émulsion en émulsifiant est 4 kg par tonne d'émulsion.

L'essai d'enrobage, tant sur matériaux calcaires que siliceux est franchement positif.

## Revendications

1. Composition émulsifiante pour émulsions acides de bitume, comportant :
de 50 à 100% d'un mélange homogène de 60 à 95 % d'un dérivé alkylaminé ou d'un mélange de tels dérivés 40 à 5 % de colophane et
de 0 à 50 % d'un solvant du dérivé alkylaminé et de la colophane compatible avec le bitume,
le dérivé alkylaminé étant pris dans le groupe constitué par les alkylpolypropylène polyamines, les alkylamidopolyméthylènepolyamines et leurs dérivés immédiats de cyclisation, le groupe alkyl étant un reste hydrocarboné, saturé ou insaturé dont le nombre de carbone est environ de 12 à 22, ainsi que leurs dérivés oxyéthylés ou oxypropylés.

2. Composition émulsifiante selon la revendication 1, dans laquelle le dérivé alkylaminé est une suif-propylène diamine.

3. Composition émulsifiante selon la revendication 1, dans laquelle le dérivé alkylaminé est une suif-polypropylène polyamine oxypropylée.

4. Emulsion acide bitumineuse, de type liant dans l'eau, comportant
a) 50 % à 70 % de liant bitumineux
b) 0,15 % à 0,2 % d'une composition émulsifiante, telle que décrite dans l'une ou l'autre des revendications 1 à 3,
c) d'une quantité suffisante d'un acide pris dans le groupe constitué d'acide chlorhydrique, l'acide acétique et l'acide phosphorique, pour que la phase aqueuse de l'émulsion présente un pH de 1,5 à 4,
d) d'eau pour complément de la formule à 100%.

5. Emulsion acide selon la revendication 4, dans laquelle l'alkylpolyamine est la suif-propylène diamine.

6. Emulsion acide selon la revendication 4, dans laquelle l'alkylpolyamine est la suif-polypropylène polyamine.

7. Emulsion acide selon les revendications 4 à 6, dans l'agent de mise au pH est l'acide phosphorique.
